Europäisches Patentamt

European Patent Office

Office européen des brevets

(19)

(11) Veröffentlichungsnummer: **0 246 577**
**A2**

(12) **EUROPÄISCHE PATENTANMELDUNG**

(21) Anmeldenummer: 87107107.2

(22) Anmeldetag: 16.05.87

(51) Int. Cl.³: **H 04 N 1/036**

(30) Priorität: 22.05.86 DE 3617249

(43) Veröffentlichungstag der Anmeldung:
25.11.87 Patentblatt 87/48

(84) Benannte Vertragsstaaten:
DE FR GB IT NL SE

(71) Anmelder: Standard Elektrik Lorenz Aktiengesellschaft
Lorenzstrasse 10
D-7000 Stuttgart 40(DE)

(72) Erfinder: Springer, Johann, Dr.
Schanbacher Strasse 9
D-7307 Aichwald(DE)

(74) Vertreter: Pohl, Heribert, Dipl.-Ing et al,
Standard Elektrik Lorenz AG Patent- und Lizenzwesen
Postfach 30 09 29
D-7000 Stuttgart 30(DE)

(54) Elektrodenstruktur für einen Druckkopf.

(57) Es wird eine Elektrodenstruktur für einen Druckkopf
einer faksimilen elektrooptischen Schreibeinrichtung zur
zeilenweisen Aufzeichnung von Bildpunkten angegeben. Die
Bildpunkte werden durch Lichttore (35) hindurch auf einem
Aufzeichnungsträger belichtet. Diese Lichttore (35) sind
reihenweise angeordnet und durch Bildpunktelektroden
(22, 22') und Hauptelektroden (23, 24, 25, 26) gebildet. Jeder
Bildpunktelektrode (22, 22') sind n Lichttore (35, 19) zugeordnet, dabei sind jeder bildpunktelektrodenreihe (27, 28) n
Hauptelektroden zugeordnet, so daß 2N–2 Lichttore durch N
Elektroden gebildet werden. Die Elektrodenstruktur ist so
aufgebaut, daß jeder Bildpunktelektrodenreihe (27, 28) auf
jeder Längsseite wenigstens eine Hauptelektrode zugeordnet
ist. Jede Bildpunktelektrode 22 weist n Schaltbereiche
(20, 21) auf, die auf unterschiedlichen Seiten der bildpunktelektroden angeordnet sind.

Fig. 2

0246577

Beschreibung

Elektrodenstruktur für einen Druckkopf

Die Erfindung betrifft die Elektrodenstruktur für einen
Druckkopf einer faksimilen elektrooptischen
Schreibeinrichtung gemäß dem Oberbegriff des Anspruchs 1.

Es ist aus der DE-OS 34 40 406 eine Elektrodenstruktur
für einen Druckkopf einer faksimilen Schreibeinrichtung
zur zeilenweisen Aufzeichnung von Bildpunkten bekannt.
Ein derartiger Druckkopf ist Bestandteil eines optischen
Druckers und ist zwischen einer Lichtquelle und einem
Aufzeichnungsträger angeordnet. Die Bildinformation wird
zeilenweise durch den Druckkopf auf den
Aufzeichnungsträger belichtet.

Der bekannte Druckkopf weist eine auf einem
elektrooptisch aktiven Substrat aufgebrachte
Elektrodenanordnung auf, bei der zwischen Druckkopf und
Lichtquelle ein Polarisator und zwischen Druckkopf und
Aufzeichnungsträger ein Analysator angeordnet ist. Die

Elektrodenstruktur auf dem elektrooptischen Substrat
besteht im einfachsten Fall aus zwei übereinander
angeordneten und von einer Isolationsschicht getrennten
Hauptelektroden und aus an beiden Seiten der
Hauptelektroden reihenweise angeordneten
Bildpunktelektroden. Der Aufzeichnungsträger bewegt sich
während des Druckens parallel zur Ebene der
Elektrodenstruktur und senkrecht zu den
Bildpunktelektrodenreihen. Eine Bildzeile wird durch zwei
Lichttorreihen belichtet. Eine derartige
Elektrodenstruktur wird im Zeitmultiplexverfahren
angesteuert, d.h., die Hauptelektroden werden
nacheinander angesteuert. Da die Hauptelektroden
übereinander angeordnet sind, entsteht zwischen ihnen
eine starke kapazitive Kopplung, was ein ausgeprägtes
unerwünschtes Übersprechverhalten und hohe Schaltzeilen
mit sich bringt.

Der Erfindung liegt die Aufgabe zugrunde, eine
Elektrodenstruktur für einen Druckkopf zu schaffen, die
kürzere Druckzeiten ermöglicht.

Diese Aufgabe wird bei einer gattungsgemäßen Vorrichtung
durch das kennzeichnende Merkmal des Anspruchs 1 gelöst.

Weitere Ausgestaltungen der Erfindung sind den übrigen
Ansprüchen und der Beschreibung zu entnehmen.

Die mit der Erfindung erzielten Vorteile bestehen
insbesondere darin, daß die Isolationsschicht zwischen
zwei Hauptelektroden bei einfachen Elektrodenstrukturen,
die im Zeitmultiplexverfahren mit einem
1-aus-2-Demultiplexer angesteuert werden, entfällt, was
zum einen eine einfachere Herstellung ermöglicht und zum

3                                    0246577

andern eine höhere Betriebssicherheit mit sich bringt, da
keine Kurzschlüsse (Pinholes) zwischen Hauptelektroden
auftreten können.

Sechs Ausführungsbeispiele der Erfindung sind in den
Figuren 1 bis 6 dargestellt und im folgenden näher
beschrieben. Es zeigen:

Fig. 1     ein erstes Ausführungsbeispiel der
           erfindungsgemäßen Elektrodenstruktur in der
           Draufsicht, und

Fig. 2     weitere Ausführungsbeispiele der erfindungs-
bis  6     gemäßen Elektrodenstruktur in der Draufsicht.

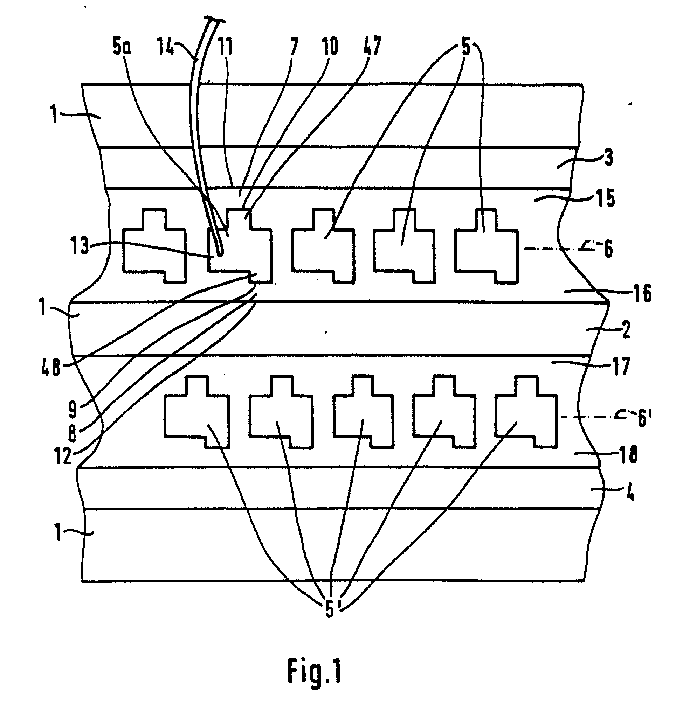

In Fig. 1 ist als erstes Ausführungsbeispiel der
Ausschnitt aus einer ersten erfindungsgemäßen
Elektrodenstruktur gezeigt. Die Elektrodenstruktur ist
periodisch ausgebildet und setzt sich im nicht gezeigten
Teil entsprechend fort. Die Elektroden sind auf der einen
Seite eines PLZT-Substrat 1 aufgebracht. Auf der anderen
Seite des Substrats ist eine Blende angebracht, die an
den Stellen, an denen der Durchtritt von Licht möglich
sein soll, fensterartige Aussparungen aufweist (nicht
gezeigt). Das PLZT-Substrat 1 ist eine elektrooptisch
aktive Keramik, welche aus den chemischen Elementen Blei,
Lanthan, Zirkon und Titan aufgebaut ist. Die
Elektrodenstruktur setzt sich aus Hauptelektroden 2, 3, 4
und aus Bildpunktelektroden 5, 5' zusammen. Die
Bildpunktelektroden 5, 5' sind in zwei
Bildpunktelektrodenreihen 6, 6' angeordnet. Die
Hauptelektroden 2, 3, 4 und die Bildpunktelektrodenreihen
6, 6' sind parallel zueinander angeordnet, wobei neben
jeder Bildpunktelektrodenreihe 6, 6' zwei auf

gegenüberliegenden Seiten liegende Hauptelektroden 2, 3; 2, 4 vorhanden sind. Die Hauptelektroden weisen eine bänderförmige Struktur auf. Der Aufbau der Bildpunktelektroden 5, 5' wird beispielhaft an der Bildpunktelektrode 5a beschrieben. Die Bildpunktelektrode 5a weist zwei Bereiche 9, 10 auf, an denen ein homogenes elektrisches Feld mit höherer Feldstärke, als an den übrigen Bereichen der Bildpunktelektrode aus der Bildpunktelektrode austritt. Diese Bereiche werden im folgenden, auch zur Beschreibung der nachfolgenden Ausführungsbeispiele, Schaltbereiche genannt. Die Form der Bildpunktelektrode 5a setzt sich aus einer rechteckigen Fläche und aus zwei, auf zwei entgegengesetzten Seiten der rechteckigen Fläche angeordneten Vorsprüngen 47, 48 zusammen. Die der rechteckigen Fläche abgewandten Seiten der Vorsprünge 47, 48 bilden die Schaltbereiche 9, 10. Als Gegenelektrode zum Schaltbereich 9 der Bildpunktelektrode 5a wirkt ein Bereich 12 der Hauptelektrode 2. Der Bereich 12 der Hauptelektrode 2 wird im folgenden als Schaltbereich 12 bezeichnet. Zwischen dem Schaltbereich 9 und dem Schaltbereich 12 liegt nun das den elektrooptischen Effekt bewirkende elektrische Feld an; dieses Gebiet wird als Lichttor 8 bezeichnet. Entsprechend ist ein Lichttor 7 zwischen dem Schaltbereich 10 und einem Schaltbereich 11 vorhanden Die Bildpunktelektroden weisen noch einen Bereich 13 zum Anbringen eines Bonddrahtes 14 auf. Es ist beim Anbringen des Bonddrahtes 14 darauf zu achten, daß dieser nicht über dem Lichttor 7 angeordnet wird. Der Bonddraht 14 ist stellvertretend nur an der Bildpunktelektrode 5a eingezeichnet. Die Anordnung der beiden Schaltbereiche 9, 10 ist so gewählt, daß durch die entsprechenden Lichttore 7 und 8 auf einer Bildzeile zwei direkt benachbarte Bildpunkte belichtet werden. Die

Elektrodenstruktur wird im Zeitmultiplexverfahren mit einem 1-aus-2-Demultiplexer angesteuert. Das bedeutet, daß in einem ersten Zeitintervall die Hauptelektrode 2 und in einem zweiten Zeitintervall die Hauptelektroden 3 und 4 gemeinsam angesteuert werden. Da sich während der Umschaltdauer der Aufzeichnungsträger weiterbewegt, weisen die Lichttorreihen 15, 18 und 16, 17 jeweils einen Abstand $d(m+\frac{1}{2})$ auf, mit d als Abstand zwischen zwei gegenüberliegenden, die Höhe einer Lichttorreihe bildenden Schaltbereichen und m als ganze Zahl größer oder gleich null. Der Abstand zwischen den Lichttorreihen 15, 16 und 17, 18 beträgt jeweils dm. Zur Abbildung einer vollständigen Bildzeile werden nicht nur die durch die Bildpunktelektroden 5 und den Hauptelektroden 2 und 3 gebildeten Lichttorreihen 15 und 16 sondern auch die durch die Bildpunktelektroden 5' der Bildpunktelektrodenreihe 6' und den Hauptelektroden 2 und 4 gebildeten Lichttorreihen 17 und 18 benötigt. Die Bildpunkte einer Bildzeile werden durch vier Lichttorreihen belichtet, wobei durch benachbarte Lichttorreihen auf der Bildzeile benachbarte Bildpunkte belichtet werden.

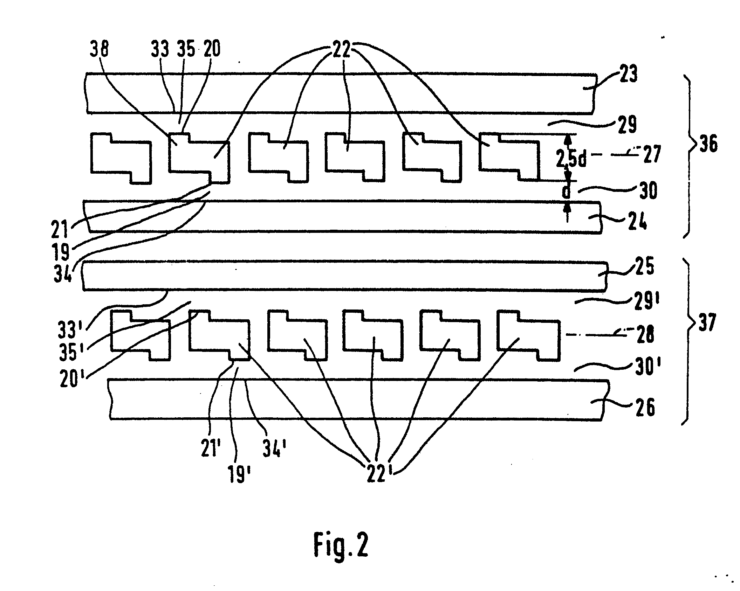

Das in Fig. 2 dargestellte zweite Ausführungsbeispiel unterscheidet sich vom ersten Ausführungsbeispiel in zwei Punkten. Erstens sind anstelle der Hauptelektrode 2 aus Fig. 1 zwei Hauptelektroden 24, 25 angeordnet und zweitens ist eine andere Anordnung der beiden Schaltbereiche 20, 21 der Bildpunktelektroden 22 vorhanden . Die Elektrodenstruktur des zweiten Ausführungsbeispiels weist vier bandförmige Hauptelektroden 23, 24, 25 und 26 und zwei Bildpunktelektrodenreihen 27 und 28 auf. Hierdurch ergeben sich zwei getrennt ansteuerbare Bereiche 36, 37 mit je zwei Lichttorreihen 29, 30 und 29', 30'. Die aus
den Schaltbereichen 20 der Bildpunktelektroden 22 und den
Schaltbereichen 33 der Hauptelektrode 23 gebildeten
Lichttore 35 ergeben die Lichttorreihe 29. Die aus den
Schaltbereichen 21 und den Schaltbereichen 34 der
Hauptelektrode 24 gebildeten Lichttore 19 ergeben die
Lichttorreihe 30. Die aus den Schaltbereichen 20' der
Bildpunktelektroden 22' und den Schaltbereichen 33' der
Hauptelektrode 25 gebildeten Lichttore 35' ergeben die
Lichttorreihe 29'. Die aus den Schaltbereichen 21' und
den Schaltbereichen 34' der Hauptelektrode 26 gebildeten
Lichttore 19' ergeben die Lichttorreihe 30'. Diese
Elektrodenstruktur wird im Zeitmultiplexverfahren mit
einem 1-aus-2-Demultiplexer angesteuert. Dadurch ergibt
sich für den oberen Bereich 36, daß abwechselnd die
Lichttorreihe 29 über die Hauptelektrode 23 und die
Lichttorreihe 30 über die Hauptelektrode 24 angesteuert
werden. Entsprechendes gilt für den unteren Bereich 37.
Dieses Ausführungsbeispiel weist gegenüber dem
Ausführungsbeispiel 1 den Vorteil auf, daß es eine
einfachere Datenaufbereitung ermöglicht. Da sich während
der Umschaltdauer der Aufzeichnungsträger weiterbewegt,
weisen die Lichttorreihen 29 und 30 und die
Lichttorreihen 29' und 30' jeweils einen Abstand von
$d(m+\frac{1}{2})$ auf, wobei d die Höhe eines Lichttores und m
eine ganze Zahl ist. Die Umschaltdauer und die
Transportgeschwindigkeit des Aufzeichnungsträgers sind so
dimensioniert, daß der Aufzeichnungsträger während eines
Umschaltvorgangs um die Strecke $\frac{d}{2}$ transportiert
wird. Der Abstand zwischen den Lichttorreihen 29 und 31
und den Lichttorreihen 30 und 32 beträgt jeweils md.

Die schaltbaren Bereiche 20, 21 der Bildpunktelektroden
22, 22' sind so angeordnet, daß zwei Bildpunkte, die
durch zwei Lichttore belichtet werden, die einer gemeinsamen Bildpunktelektrode 22 zugehörig sind, auf der Bildzeile durch einen dritten Bildpunkt getrennt abgedruckt sind. Hierdurch läßt sich der Bondbereich 38 auf den Bildpunktelektroden 22, 22' auf der Flächenmitte der Bildpunktelektroden anbringen.

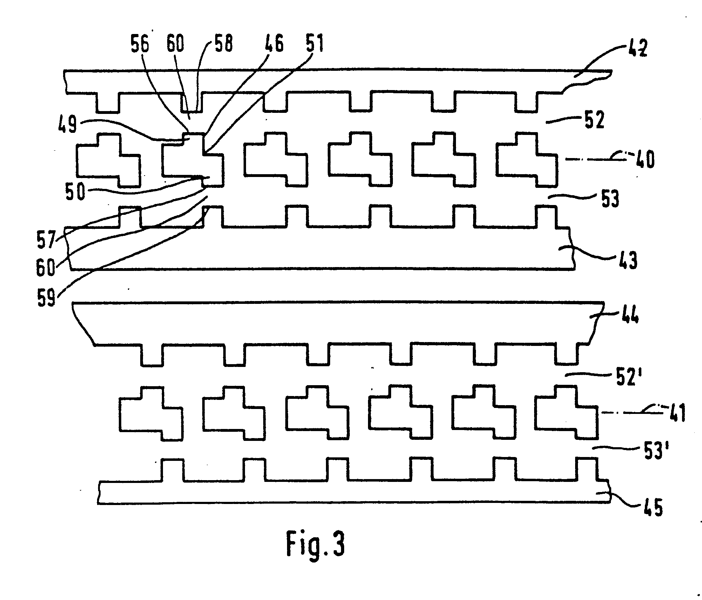

Die in Fig. 3 gezeigte Elektrodenstruktur stellt das dritte Ausführungsbeispiel dar und eignet sich ebenfalls zur Zeitmultiplexansteuerung mit einem 1-aus-2-Demultiplexer. Sie weist ebenfalls zwei Bildpunktelektrodenreihen 40, 41 und vier Hauptelektroden 42, 43, 44, 45 auf. Die Bildpunktelektroden 46 besitzen eine ähnliche Struktur, wie die des ersten Ausführungsbeispiels. Jede Bildpunktelektrode 46 setzt sich ebenfalls aus einer rechteckigen Fläche und aus zwei auf zwei entgegengesetzen Seiten der rechteckigen Fläche angeordneten Vorsprüngen 49, 50 zusammen, dabei weist die rechteckige Fläche an einer Ecke eine Aussparung 51 auf. Die der rechteckigen Fläche abgewandten Seiten der Vorsprünge 49, 50 bilden die Schaltbereiche 56, 57. Die vier Hauptelektroden 42, 43, 44, 45 weisen jeweils auf der den Bildpunktelektroden 46 zugewandten Seite Vorsprünge mit den Schaltbereichen 58, 59 derart auf, daß den Schaltbereichen 58, 59 je ein Schaltbereich 56, 57 der Bildpunktelektroden gegenüberliegend angeordnet ist. Die Bereiche zwischen den Schaltbereichen 56, 58 und zwischen den Schaltbereichen 57, 59 bilden die Lichttore 60 und somit auch die Lichttorreihen 52, 53, 52', 53'. Die Bildpunktelektroden 46 sind ferner so dimensioniert, daß der Abstand jeweils zwischen den Lichttorreihen 52 und 53 und den Lichttorreihen 52' und 53' gleich $d(m+\frac{1}{2})$ und der Abstand zwischen den Lichttorreihen 52 und 52' und den Lichttorreihen 53 und 53' jeweils md beträgt; dabei ist m eine positive ganze Zahl und d der

ZT/P2-Se/Gn

J.Springer-12
2374A

Abstand zwischen zwei sich gegenüberliegenden Schaltbereichen. Die Zuordnung der Lichttore bezüglich der Bildpunkte auf einer Bildzeile entspricht der aus dem ersten Ausführungsbeispiel.

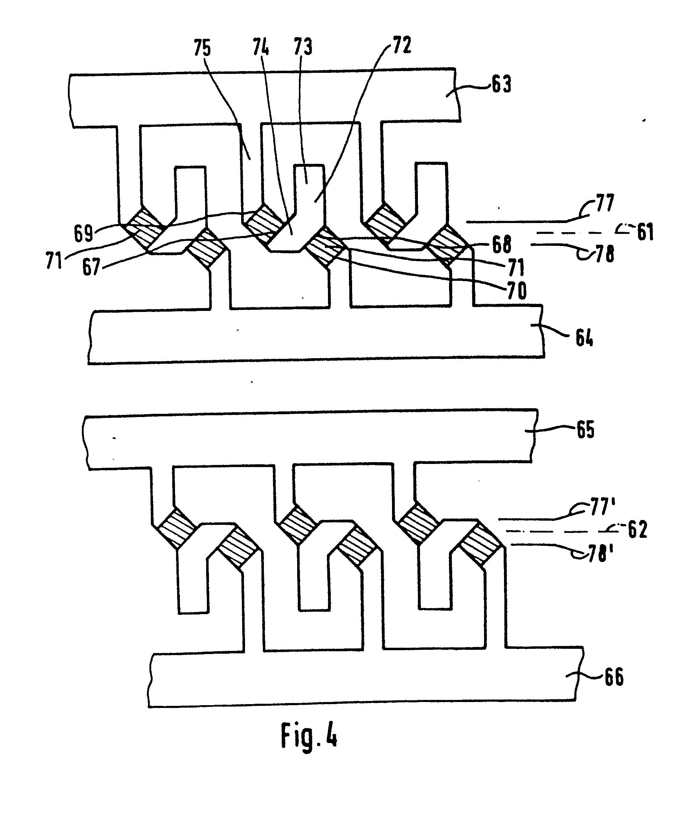

Die in Fig. 4 gezeigte Elektrodenstruktur stellt das vierte Ausführungsbeispiel dar und eignet sich, wie die beiden vorhergehenden Ausführungsbeispiele, zur Zeitmultiplexansteuerung. Sie weist ebenfalls zwei Bildpunktelektrodenreihen 61, 62 und vier Hauptelektroden 63, 64, 65, 66 auf. Die Lichttore 71 sind ebenfalls durch zwei sich gegenüberliegende Schaltbereiche 67, 69 und 68, 70 festgelegt und als Lichttorreihen 77, 78, 77', 78' ausgebildet. Die Lichttore 71 sind in Fig. 4 schraffiert eingezeichnet. Die Hauptelektroden 63, 64, 65, 66 sind streifenförmig ausgebildet und weisen schmale langgestreckte Vorsprünge 75 auf. Die den streifenförmigen Hauptelektroden abgewandten Seiten der Vorsprünge weisen jeweils eine Abknickung unter einem Winkel von 45° gegenüber der Längsachse des Streifens auf. Die Enden der Abknickungen bilden die Schaltbereiche 69, 70 der Hauptelektroden 63, 64, 65, 66. Die Vorsprünge der Hauptelektroden 63 und 66 sind länger ausgebildet als die der Hauptelektroden 64 und 65. Die Bildpunktelektroden 72 sind jeweils zwischen den Hauptelektroden 63, 64 und 65, 66 als Bildpunktelektrodenreihen 61 und 62 angeordnet. Sie bestehen je aus einer zweischenkligen Fläche, bei welcher die beiden Schenkel 73, 74 einen Winkel von 135° einschließen. Der eine Schenkel 73 ist parallel zu den Vorsprüngen 75 und zwischen zwei schmalen Vorsprüngen 75 einer Hauptelektrode angeordnet. Der andere Schenkel 74 ist parallel zu den die Schaltbereiche 69, 70 bildenden Seiten der schmalen Vorsprünge 75 und zwischen zwei dieser Seiten von Vorsprüngen 75 benachbarter

zusammenhängender Elektroden angeordnet. Die den Schaltbereichen 69, 70 gegenüberliegenden Seiten des Schenkels 74 bilden die Schaltbereiche 67, 68 der Bildpunktelektrode 72. Der Abstand zwischen zwei sich gegenüberliegenden Schaltbereichen 67, 69 und 68, 70 entspricht der Länge der Schaltbereiche 69, 70. Die Lichttore 71 weisen somit einen quadratischen Querschnitt auf, wobei die Seiten der Lichttore gegenüber der Richtung der Lichttorreihen 77, 78, 77', 78' um einen Winkel von 45° verdreht angeordnet sind. Hieraus ergibt sich beim Belichten eines Aufzeichnungsträgers eine Verdrehung der Bildpunkte um ebenfalls 45°. Diese Elektrodenstruktur ermöglicht im Vergleich zu den Elektrodenstrukturen aus den vorhergehenden Ausführungsbeispielen ein anderes Rastermuster auf dem Aufzeichnungsträger, mit dem beispielsweise Diagonalen besser abgebildet werden können. Ferner reduzieren die schmalen Vorsprünge 75 das Übersprechverhalten zwischen den Bildpunktelektroden 73.

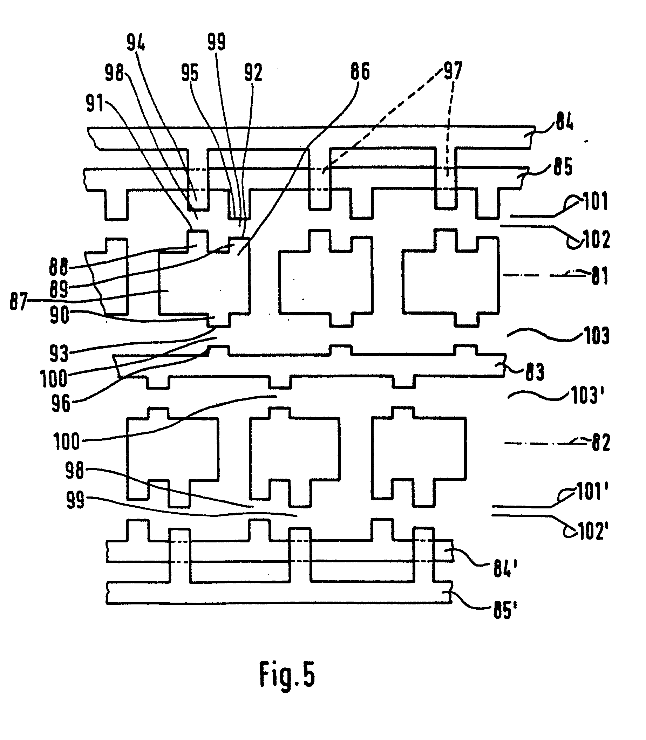

Die in Fig. 5 gezeigte Elektrodenstruktur stellt das fünfte Ausführungsbeispiel dar und eignet sich besonders zur Zeitmultiplexansteurung mit einem 1-aus-3-Demultiplexer. Die Elektrodenstruktur weist hierzu zwei Bildpunktelektrodenreihen 81, 82 und fünf Hauptelektroden 83, 84, 84', 85, 85' auf. Die Bildpunktelektroden setzen sich jeweils aus einer rechteckigen Fläche 87 und aus drei sich an diese Fläche anschließende Vorsprünge 88, 89, 90, deren Endflächen die Schaltbereiche 91, 92, 93 bilden, zusammen. Die fünf Hauptelektroden 83, 84, 84', 85, 85' sind parallel zu den Bildpunktelektrodenreihen angeordnet und weisen ebenfalls Vorsprünge mit Schaltbereichen 94, 95, 96 auf. Die Hauptelektrode 83 ist zwischen den beiden Bildpunktelektrodenreihen 81, 82 und die Hauptelektroden
84, 85 und 84', 85' sind jeweils paarweise an den äußeren
Längsseiten der Bildpunktelektrodenreihen 81, 82
angeordnet. Die Vorsprünge der Hauptelektroden 84 und 85'
kreuzen jeweils mit den Hauptelektroden 84' und 85. Die
Hauptelektroden sind an diesen Kreuzungsstellen 97 durch
eine Isolationsschicht (nicht gezeigt) getrennt
angeordnet. Die Schaltbereiche 91, 92, 93 der
Bildpunktelektroden 86 und die Schaltbereiche 94, 95, 96
der Hauptelektroden 83, 84, 84', 85, 85' weisen alle eine
gleiche Breite d auf. Die Bildpunktelektroden und die
Hauptelektroden sind nun einander derart zugeordnet, daß
jeweils die Schaltbereiche 91, 94, die Schaltbereiche 92,
95 und die Schaltbereiche 93, 96 im Abstand d
gegenüberliegend angeordnet sind. Die Bereiche zwischen
den Schaltbereichen bilden die Lichttore 98, 99, 100.
Hierzu sind die Schaltbereiche 91, 92 auf der gleichen
Seite jeder Bildpunktelektrode 86 und die Schaltbereiche
93 auf der den Schaltbereichen 91, 92 entgegengesetzten
Seite jeder Bildpunktelektrode 86 angeordnet. Die durch
die zugehörigen Lichttore belichteten Bildpunkte sind
jeweils nebeneinander auf der Bildzeile abgebildet. Dabei
liegt der durch das Lichttor 100 belichtete Bildpunkt
zwischen den beiden anderen. Die Lichttore sind
quadratisch ausgebildet, ihre Seiten weisen die Länge d
auf. Die Lichttore 98 bilden die Lichttorreihen 101 und
101', die Lichttore 99 die Lichttorreihen 102 und 102',
die Lichttore 100 bilden die Lichttorreihen 103 und 103'.
Die Elektrodenstruktur ist so aufgebaut, daß sie im
Zeitmultiplexverfahren angesteuert werden kann. Zur
Schaltung der Lichttore werden jeweils die entsprechenden
Bildpunktelektroden und nacheinander die Hauptelektroden
83, 84, 84' und 85, 85' angesteuert. Die Hauptelektroden
84, 84' und 85, 85' werden jeweils gemeinsam angesteuert.

0246577

Zur Kompensation des Vorlaufs des Aufzeichnungsträgers
während der Umschaltzeit zwischen den Hauptelektroden
sind die Lichttorreihen 103, 103' gegenüber den
Lichttorreihen 102, 102' und diese gegenüber den
Lichttorreihen 103, 103' um die Stecke $d(m\pm\frac{1}{3})$ in
Richtung der Transportrichtung des Aufzeichnungsdträgers
versetzt angeordnet. Da jede Bildpunktelektrode zur
Bildung von drei Lichttoren beiträgt, und für jede
Bildpunktelektrode nur eine Bond-Verbindung benötigt
wird, ermöglicht diese Elektrodenstruktur eine hohe
Auflösung, die letztlich durch die Dichte der
Bond-Verbindungen beschränkt ist. Diese
Elektrodenstruktur eignet sich somit auch zur Abbildung
eines Dreifarbendruckes.

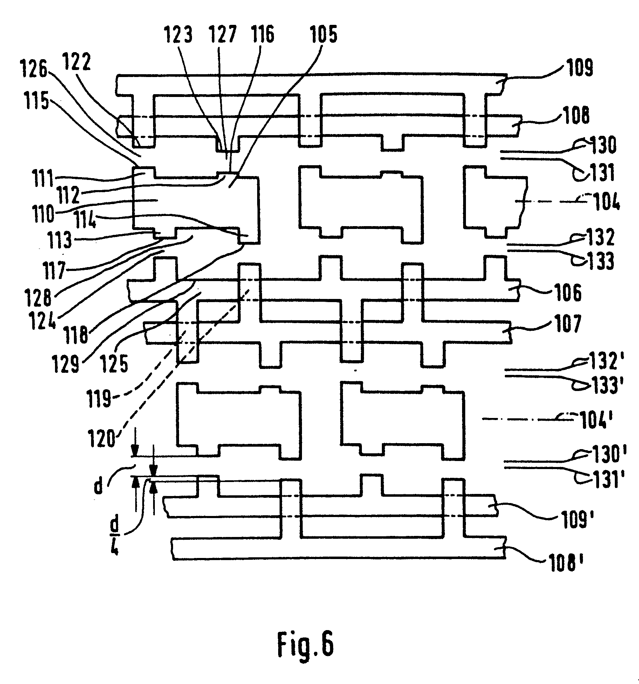

Die in Fig. 6 gezeigte Elektrodenstruktur stellt das
sechste Ausführungsbeispiel dar und eignet sich besonders
zur Zeitmultiplexansteuerung mit einem
1-aus-4-Demultiplexer. Die Elektrodenstruktur weist
hierzu zwei Bildpunktelektrodenreihen 104, 104' und sechs
Hauptelektroden 106, 107, 108, 108', 109 und 109' auf.
Die Bildpunktelektroden 105 setzen sich jeweils aus einer
rechteckigen Fläche 110 und aus vier sich an diese Fläche
anschließenden Vorsprünge 111, 112, 113, 114, deren
Endflächen die Schaltbereiche 115, 116, 117, 118 bilden,
zusammen. Die Bildpunktelektroden und die sechs,
ebenfalls Vorsprünge aufweisende, Hauptelektroden sind
ähnlich wie die Elektroden des fünften
Ausführungsbeispiels angeordnet. Der Unterschied besteht
darin, daß anstelle der Hauptelektrode 83 (Fig. 5) zwei
Hauptelektroden 106 und 107 (Fig. 6) angeordnet sind.
Dabei überkreuzen die Vorsprünge 119 der Hauptelektrode
106 mit der Hauptelektrode 107 und die Vorsprünge 120 der
Hauptelektrode 107 mit der Hauptelektrode 106. Die

Elektroden sind an diesen Kreuzungsstellen durch eine
Isolationsschicht (nicht gezeigt) getrennt. Die
Endflächen der Vorsprünge der Hauptelektroden 106, 107,
108, 108', 109, 109' bilden die Schaltbereiche 122, 123,
124, 125. Die Schaltbereiche 115, 116, 117, 118 der
Bildpunktelektroden 105 und die Schaltbereiche 122, 123,
124, 125 weisen alle eine gleiche Breite d auf. Die
Bildpunktelektroden und die Hauptelektroden sind nun so
einander zugeordnet, daß jeweils die Schaltbereiche
115,122, die Schaltbereiche 116,123, die Schaltbereiche
117,124 und die Schaltbereiche 118,125 im Abstand d
gegenüberliegend angeordnet sind. Hierzu sind je zwei
Schaltbereiche 115, 116 und 117, 118 auf einer Seite
jeder Bildpunktelektrode, jedoch paarweise auf
entgegengesetzten Seiten, angeordnet. Die Bereiche
zwischen gegenüberliegenden Schaltbereichen bilden die
Lichttore 126, 127, 128, 129, welche quadratisch
ausgebildet sind. Ihre Seiten weisen die Länge d auf. Die
Lichttore 126 bilden die Lichttorreihen 130 un 130', die
Lichttore 127 die Lichttorreihen 131 und 131', die
Lichttore 128 die Lichttorreihen 132 und 132' und die
Lichttrore 129 die Lichttorreihen 133 und 133'. Zur
Schaltung der Lichttore werden jeweils die entsprechenden
Bildpunktelektroden und nacheinander die Hauptelektroden
106, 107, 108, 108', 109 und 109' angesteuert. Die
Hauptelektroden 108, 108' und 109, 109' werden jeweils
gemeinsam angesteuert. Zur Kompensation des Vorlaufs des
Aufzeichnungsträgers während des Umschaltvorgangs
zwischen den Hauptelektroden sind die Lichttorreihen
zueinander jeweils um die Strecke $d(m\pm\frac{1}{4})$ in
Transportrichtung des Aufzeichnungsträgers versetzt
angeordnet. Durch die Vergrößerung der Anzahl der
Lichttore, die über einen Bonddraht angesteuert werden,
läßt sich eine extrem hohe Auflösung von 32 Bildpunkten
pro mm erzielen.

13 0246577

Beim siebten Ausführungsbeispiel (keine Abbildung) ist
die Elektrodenstruktur des sechsten Ausführungsbeispiels
zu einer Elektrodenstruktur für eine
Zeitmultiplexansteuerung mit einem 1-aus-3-Demultiplexer
ausgebildet. Hierzu sind die Hauptelektroden 109 und
109', sowie die entsprechenden Vorsprünge 111 mit den
Schaltbereichen 115 weggelassen und die restlichen
Vorsprünge mit ihren Schaltbereichen so angeordnet, daß
wieder eine vollständige Abbildungszeile belichtet werden
kann. Der Vorteil dieser Elektrodenstruktur gegenüber der
aus dem fünften Ausführungsbeispiel liegt darin, daß die
Kreuzungsbereiche 119, 120 auf zwei Hauptelektroden
beschränkt bleiben.

ZT/P2-Se/Gn                                    J.Springer-12

20.05.1986                                     2374A

**0246577**

Patentansprüche

1. Elektrodenstruktur für einen Druckkopf einer faksimilen, mehrere Lichttorreihen aufweisenden elektrooptischen Schreibeinrichtung zur zeilenweisen Aufzeichnung von Bildpunkten, die auf einem elektrooptischen Substrat angeordnet ist und Bildpunktelektroden und Hauptelektroden aufweist, wobei die Bildpunktelektroden reihenweise als Bildpunktelektrodenreihen und die Lichttore reihenweise als Lichttorreihen ausgebildet sind, d a d u r c h g e k e n n z e i c h n e t , daß auf beiden Längsseiten der Bildpunktelektrodenreihen (6, 6') Hauptelektroden (2, 3,4 ) angeordnet sind.

2. Elektrodenstruktur nach Anspruch 1, dadurch gekennzeichnet, daß jede Bildpunktelektrode (5) n auf entgegengesetzten Seiten der Bildpunktelektrode (5) angeordnete Schaltbereiche (9, 10) aufweist, wobei n eine ganze Zahl größer als eins ist.

ZT/P2-Se/Gn                    J.Springer-12

22 05 1986                     2374A

3.  Elektrodenstruktur nach einem der Ansprüche 1 oder 2, dadurch gekennzeichnet, daß für die Belichtung einer Bildzeile N Lichttorreihen (15, 16, 17, 18) vorgesehen sind, und daß den N Lichttorreihen (15, 16, 17, 18) $\frac{N}{M}$ Reihen (6, 6') von Bildpunktelektroden und wenigstens N-1 Hauptelektroden (2, 3, 4) zugeordnet sind, wobei N eine ganze Zahl größer als zwei und M die Anzahl der Ausgänge eines zur Ansteuerung verwendeten 1-aus-M Demultiplexer ist.

4.  Elektrodenstruktur nach einem der Ansprüche 1 bis 3, dadurch gekennzeichnet, daß die Lichttore (7, 8) eine Höhe d aufweisen, daß für die Belichtung einer Bildzeile N Lichttorreihen (6, 6') vorgesehen sind, und der Abstand zwischen den direkt nacheinander anzusteuernden Lichttorreihen (6, 6') $d(m\pm\frac{1}{M})$ beträgt, wobei m eine ganze Zahl größer oder gleich null ist.

5.  Elektrodenstruktur nach einem der Ansprüche 1 bis 4, dadurch gekennzeichnet, daß die Lichttore (71) rechteckig ausgebildet und so angeordnet sind, daß ihre Seiten und die Verbindungslinie der Lichttorreihe (61) einen Winkel von 45° einschließen.

0246577

Fig.1

Fig.2

0246577

Fig.3

Fig. 4

Fig.5

Fig.6